# EUROPÄISCHE PATENTSCHRIFT

(11) **EP 2 523 196 B1**
(45) Veröffentlichungstag und Bekanntmachung des Hinweises auf die Patenterteilung: **15.01.2014**
(21) Anmeldenummer: 11003901.3
(22) Anmeldetag: 12.05.2011
(51) Int. Cl.: H01F 27/00, H01F 27/30, B65D 85/67

(54) **Wicklungsfixiervorrichtung**
Coil fixing device
Dispositif de fixation d'enroulement

(43) Veröffentlichungstag der Anmeldung: 14.11.2012
(73) Patentinhaber: ABB Technology AG, 8050 Zürich (CH)
(72) Erfinder: Brendel, Hartmut, 06120 Halle (DE); Schmidt, Jutta, 39116 Magdeburg (DE); Schreiter, Sebastian, 04317 Leipzig (DE); Kouzmine, Oleg, 40217 Düsseldorf (DE); Werle, Peter, 29664 Walsrode (DE)
(74) Vertreter: Partner, Lothar

(56) Entgegenhaltungen:
- EP-A1- 2 355 115
- DE-A1- 3 027 883
- DE-B3- 10 250 957
- JP-A- 59 014 623
- JP-A- 2009 049 276

## Beschreibung

Die Erfindung betrifft eine Wicklungsfixiervorrichtung für eine hohlzylindrische Hochspannungswicklung, umfassend ein säulenartiges Element, welches an seinen beiden axialen Enden mit jeweils einem quer dazu angeordneten Halteelement verbunden ist, von denen wenigstens eines längs des säulenartiges Elementes bewegbar und von diesem lösbar ist, wobei zwischen den beiden Halteelementen ein Positionierbereich zur Anordnung der hohlzylindrischen Hochspannungswicklung gebildet ist.

Es ist allgemein bekannt, dass in Energieverteilungsnetzen Hochspannungstransformatoren zum Einsatz kommen, um eine Spannungstransformation von einer Höchstspannungsebene, beispielsweise 380kV zu einer niedrigeren Spannungsebene, beispielsweise 110kV, durchzuführen. Derartige Transformatoren haben eine Nennleistung in einem Bereich von beispielsweise 50MVA bis etlichen 100MVA und weisen je nach Leistung ein Gewicht von beispielsweise 200t auf. Transformatoren in diesen Spannungsebenen sind typischerweise als Öltransformatoren ausgeführt, das heißt, dass der Transformatorkern und die üblicherweise dreiphasig ausgeführten Wicklungen in einem mit Öl gefüllten Transformatorkessel angeordnet sind, dessen Höhe - ohne Ausleitungsisolatoren - mehrere Meter, beispielsweise 4m oder 6m, und dessen Länge deutlich über 15m liegen kann. Die Größe einer der üblicherweise drei darin um einen jeweiligen Transformatorkernschenkel angeordneten hohlzylindrischen Hochspannungswicklungen beträgt ohne weiteres 3m und mehr bei einem Durchmesser von 2m und mehr. Der Begriff Hochspannungswicklung umfasst im Rahmen dieser Anmeldung elektrische Wicklungen für eine Nennspannung ab einigen kV bis hin zu mehreren 100kV, wobei Leistungsbereiche von wenigstens ab einigen MVA bis hin zu mehreren 100 MVA und darüber abgedeckt sind. Ebenso sind vom Begriff Hochspannungswicklung vormontierte Wicklungsblöcke abgedeckt, welche aus mehreren Wicklungen zusammengesetzt sind. Dies bedeutet beispielsweise, dass mehrere hohzylindrische Wicklungen verschiedener Durchmesser radial ineinander angeordnet sind oder mehrere Wicklungen mit gleichem oder ähnlichem Durchmesser axial hintereinander angeordnet sind.

Transformatoren dieser Größenklasse sind zumeist Unikate, deren Transport vom Transformatorwerk zum Endkunden und zurück mit einem erheblichen logistischen Aufwand verbunden ist. Insbesondere bei Wiederaufarbeitungen von Transformatoren beziehungsweise bei Reparaturarbeiten vor Ort kann es vorkommen, dass eine oder mehrere Hochspannungswicklungen bei einem existierenden Transformator direkt beim Kunden ausgetauscht werden. Dies hat den Vorteil, dass der Transport des gesamten Transformators vom Kunden in das Transformatorwerk und zurück vermieden ist und die Reparatur beziehungsweise die Aufarbeitung schneller erfolgen kann. Hierzu ist es allerdings notwendig, die neue Hochspannungswicklungen beziehungsweise vormontierte Wicklungsblöcke vom Transformatorwerk zum Kunden zu transportieren.

Ein derartiger Transport kann beispielsweise auch erforderlich sein, wenn - aufgrund einer ungleichmäßigen Auslastung mehrerer Transformatorwerke ein und desselben Herstellers baugleiche Hochspannungswicklungen oder vormontierte Wicklungsblöcke in verschiedenen Werken gefertigt werden. In diesem Fall sind alle Hochspannungswicklungen zum Zusammenbauort des Hochspannungstransformators zu verbringen. In den Dokumenten EP 2 355 115 A1 JP 2009 049 276, DE 102 50 957 B3, JP 59 014 623 und DE 3 027 883 sind beispielsweise Transportgehäuse für eine Wicklung oder einen Wicklungsblock offenbart.

Nachteilig an einem solchen Transport ist jedoch, dass die Hochspannungswicklung oder ein vormontierter Wicklungsblock gemäß dem Stand der Technik nur aufrecht erfolgen kann, d.h. die Wicklung beziehungsweise deren Wickelachse ist senkrecht ausgerichtet. Hintergrund hierfür ist, dass eine gefertigte Hochspannungswicklung über keine hinreichende mechanische Stabilität verfügt, um gekippt werden zu können. Ein Brechen oder zumindest eine Deformation wäre die nachteilige Folge. Eine stehende Hochspannungswicklung, welche somit auch nur in stehender Ausrichtung transportiert werden kann, stellt insofern einen erheblichen logistischen Aufwand für einen Transport dar, als bei einer Höhe von beispielsweise 5m jegliches Standardtransportprofil beispielsweise eines Eisenbahn- oder Lastkraftwagentransportes überschritten ist.

Ausgehend von diesem Stand der Technik ist es Aufgabe der Erfindung eine Vorrichtung anzugeben, welche einen vereinfachten Transport einer Hochspannungswicklung beziehungsweise eines vormontierten Wicklungsblockes ermöglicht.

Diese Aufgabe wird gelöst durch eine Wicklungsfixiervorrichtung der eingangs genannten Art ferner dadurch gekennzeichnet, dass im Positionierbereich längs des säulenartigen Elementes axial bewegliche Distanzelemente vorgesehen sind, durch welche eine radiale Fixierung der hohlzylindrischen Hochspannungswicklung in ihrem Innenraum ermöglicht ist, wobei längs des säulenartigen Elements wenigstens eines der Distanzelemente mit einer ersten Grundfläche zwischen zwei anderen der Distanzeremente mit einer über der ersten Grundfläche überstehenden zweiten Grundfläche angeordnet ist, wobei die zweite Grundfläche auf den Innendurchmesser der Hochspannungswicklung angepasst ist und dass Mittel vorhanden sind, um das wenigstens eine bewegbare Halteelement gegenüber dem anderen Halteelement mit einer Zugkraft zu beaufschlagen, so dass eine Fixierung der hohlzylindrischen Hochspannungswicklung an ihren axialen Enden ermöglicht ist. Die Beweglichkeit der Distanzelemente ist nicht mehr gegeben, wenn eine Wicklung oder ein Wicklungsblock in der Wicklungsfixiervorrichtung angeordnet und fixiert ist. Auch können mehrere Distanzelemente bereits zu einer Einheit vormontiert sein, welche ihrerseits dann bei der Fixierung der Wicklung montiert werden.

Eine derartige Wicklungsfixiervorrichtung ermöglicht, eine darin angeordnete Hochspannungswicklung oder einen vormontierten Wicklungsblock derart zu fixieren und zu stabilisieren, so dass ein liegender Transport der Hochspannungswicklung beziehungsweise des vormontierten Wicklungsblocks ermöglicht ist. Die für einen Transport kritischste Dimension bei einer Hochspannungswicklung ist nämlich deren Länge, welche zumeist das Transportprofil, welches beispielsweise durch die Dimensionen von Lastkraftwagen oder Eisenbahnwagen vorgegeben ist, überschreitet. Dieses beträgt beispielsweise maximal 2,8m in der Breite und 4m in der Höhe, je nach gewähltem Transportmittel. Die maximal transportierbare Länge beträgt bei einem LKW oder auch bei einem Eisenbahnwagen ohne weiteres über 10m. Somit ist eine Hochspannungswicklung mit einer Grundfläche von beispielsweise 2,5m x 2,5m und einer Höhe von 5m in liegender Form ohne weiteres in einem der genannten Standardtransportmittel transportierbar.

Um eine hinreichende Stabilisierung einer zu transportierenden Hochspannungswicklung zu erreichen, sind erfindungsgemäß einerseits Distanzelemente mit einer ersten Grundfläche vorgesehen, wobei wenigstens ein Distanzelement mit einer ersten Grundfläche zwischen zwei Distanzelementen mit einer über der ersten Grundfläche überstehenden zweiten Grundfläche angeordnet ist, wobei die zweite Grundfläche auf den Innendurchmesser der Hochspannungswicklung angepasst ist. Hintergrund für die alternierende Anordnung von breiten und schmalen Distanzelementen ist, dass die großen Distanzelemente auf den Innenradius einer zu fixierenden Hochspannungswicklung angepasst sind, also deren direkter radialer Fixierung dienen. Da eine derartige Fixierung in bestimmten Abstandsintervallen ausreichend ist, sind erfindungsgemäß die schmalen Distanzelemente lediglich als Abstandhalter zur Einhaltung der Abstandsintervalle, beispielsweise jeweils 50cm, erforderlich. Der benötigte Materialeinsatz und der Montageaufwand können dadurch erheblich gesenkt werden. Zusätzlich ist erfindungsgemäß vorgesehen über die Haltevorrichtungen und entsprechende Mittel eine Druckkraft auf die beiden axialen Enden der Hochspannungswicklung aufzubringen, so dass deren Stabilität erhöht wird. Eine Hochspannungswicklung ist nämlich durchaus mit einem Druck belastbar, lediglich eine Zugkraft kann diese nur in sehr begrenztem Umfang aufnehmen. Sofern das Aufbringen einer permanenten Druckkraft zwischen den beiden axialen Enden über mit einer Zugkraft beaufschlagbare Mittel, wie beispielsweise einer Zugstange oder einem Seil, erfolgt, dienen diese Mittel ebenfalls dazu, eine zwischen den axialen Enden aufgebrachte Zugkraft, beispielsweise bei einem Kippvorgang der in der Wicklungsfixiervorrichtung befindlichen Hochspannungswicklung, von dieser fernzuhalten.

Um eine Fixierung der Hochspannungswicklung zu erreichen und beispielsweise einem Verbiegen bei einem Kippvorgang vorzubeugen, ist es erfindungsgemäß vorgesehen, die hohlzylindrische Hochspannungswicklung in ihrem inneren Bereich mittels der Distanzelementen radial zu fixieren, welche zumindest bei noch nicht fixierter Hochspannungswicklung beweglich längs des säulenartigen Elementes, das beispielsweise als Abstützrohr ausgeführt sein kann, angeordnet sind. Selbstverständlich können die Distanzelemente als separate und damit bewegliche Komponenten direkt montiert werden. Diese Distanzelemente sind vorzugsweise ring- bzw. scheibenähnlich ausgeformt und weisen üblicherweise ein mittiges Loch auf, welches dann von dem säulenartigen Element durchgriffen wird. Auf diese Weise lassen sich die Distanzelemente einfach und geführt durch das säulenartige Element übereinander stapeln. Bevorzugter Weise ist der Durchmesser der jeweiligen Löcher der Distanzelemente auf den Durchmesser des säulenartigen Elementes beziehungsweise des Abstützrohres angepasst, so dass ein radiales Verrutschen ausgeschlossen ist.

Der Außendurchmesser zumindest einiger Distanzelemente ist angepasst auf den Innendurchmesser einer jeweils in der Wicklungsfixiervorrichtung zu fixierenden hohlzylindrischen Hochspannungswicklung. Das säulenähnliche Element weist einen genügend großen Durchmesser beziehungsweise eine genügend hohe Stabilität zum Abfangen von radialen Kräften auf, beispielsweise durch eine Ausführung als Abstützrohr aus Edelstahl mit einem Außendurchmesser von beispielsweise 20cm. Auf diese Weise kann eine mögliche Verformung einer Hochspannungswicklung in einer Richtung quer zum säulenartigen Element - beispielsweise bei einem Kippvorgang der in der Wicklungsfixiervorrichtung angeordneten Hochspannungswicklung - über die Distanzelemente und das säulenartige Element abgefangen beziehungsweise verhindert werden.

Um eine Anordnung der Distanzelemente und auch einer Hochspannungswicklung um das säulenartige Element zu ermöglichen, ist es erfindungsgemäß vorgesehen, wenigstens ein Halteelement lösbar von dem säulenartigen Element auszugestalten, vorzugsweise das obere. Dann können die anzuordnenden Komponenten von oben eingeführt werden. Um die Wicklungsfixiervorrichtung auch für verschiedene Hochspannungswicklungshöhen geeignet zu machen, ist vorzugsweise das obere Halteelement auch längs des säulenartigen Elementes bewegbar auszugestalten.

Auf diese Weise ermöglicht es die erfindungsgemäße Wicklungsfixiervorrichtung in vorteilhafter Weise, eine Hochspannungswicklung derart zu fixieren und zu stabilisieren, dass diese sicher und ohne Beschädigungsrisiko in eine waagerechte Lage gekippt werden kann und in dieser transportierbar ist.

Entsprechend einer bevorzugten Ausgestaltungsform der erfindungsgemäßen Wicklungsfixiervorrichtung ist wenigstens ein Halteelement plattenähnlich ausgeprägt, beispielsweise als Metallplatte welche auf einer Sandwichkonstruktion aus Metall aufgebracht ist, beispielsweise mittels Schweißen. Hierdurch ist eine ebene Standbeziehungsweise Auflagefläche für die axialen Enden einer zu fixierenden Wicklung ermöglicht, welche sich zudem durch eine hohe Stabilität und ein geringes Gewicht auszeichnet.

Entsprechend einer weiteren Ausgestaltung der Wicklungsfixiervorrichtung ist wenigstens ein Lagerelement an der dem Positionierbereich zugewandten Seite des jeweiligen Halteelementes vorgesehen. Derartige Lagerelemente können beispielsweise weise bei einer jeweils konstanten Höhe einen dreieckigen oder tortenstückähnlichen Grundriss aufweisen und als gegebenenfalls infinitesimal federndes oder zumindest nicht völlig starres Pufferelement zwischen Lagerelement und zu fixierender Spule vorgesehen sein. Hierbei können mehrere gleichartige Lagerelemente ringähnlich um das säulenartige Element angeordnet sein. Hauptzweck derartiger Lagerelemente ist das Vermeiden einer Beschädigung einer zu fixierenden Hochspannungswicklung, insbesondere bei Aufbringen einer Druckkraft zwischen den Halteelementen.

Erfindungsgemäß besonders geeignet als Material für derartige Lager- und/oder Distanzelemente ist Holz. Dieses ist einerseits einfach zu bearbeiten, weist eine hohe Druckstabilität aber dennoch auch eine gewisse Nachgiebigkeit auf, durch welche eine Beschädigung einer beispielsweise darauf angeordneten Hochspannungswicklung vermieden ist. Es können jedoch auch mitteldichte Faserplatten (MDF), Pressspanplatten oder Platten aus einem ähnlichen Material verwendet werden. In ebenso vorteilhafter Weise sind insbesondere aus Stabilitätsgründen die Halteelemente und/oder das säulenartige Element vorwiegend aus einem Metal gefertigt.

Entsprechend einer besonders bevorzugten Ausgestaltung der erfindungsgemäßen Wicklungsfixiervorrichtung sind Zugstangen oder Zugseile zwischen den Halteelementenvorgesehen, um die Zugkraft zwischen diesen Halteelementen aufzubringen, beziehungsweise um einen Druck auf die zu fixierende Hochspannungswicklung aufzubringen. Diese sind vorzugsweise aus einem Metall gefertigt und weisen eine hohe Belastbarkeit in Zugrichtung auf. Dies ist gerade eine mechanische Eigenschaft, welche eine zu fixierende Hochspannungswicklung nicht aufweist. Daher sind derartige Zugstangen oder Zugseile besonders geeignet, um Zugkräfte von einer in der Wicklungsfixiervorrichtung angeordneten Wicklung fernzuhalten.

Entsprechend einer weiteren Ausgestaltung einer erfindungsgemäßen Wicklungsfixiervorrichtung sind die Zugstangen oder Zugseile zumindest an einem ihrer beiden Enden mit einem Gewinde versehen. Dies ermöglicht einerseits eine besonders flexible Montage auf einem jeweiligen Halteelement, indem das gewindeseitige Ende der jeweiligen Zugstange oder des jeweiligen Zugseiles in einen entsprechend vorgesehenen Gewindegang in dem jeweiligen plattenähnlichen Halteelement geschraubt wird. Zudem ermöglicht ein Gewinde auch ein flexibles Justieren beziehungsweise Längenverstellen der Zugstangen beziehungsweise Zugseile. Dies ist insbesondere bei einer hohen Höhenvielfalt von in der Wicklungsfixiervorrichtung anzuordnenden Hochspannungswicklungen von Vorteil.

Gemäß einer weiteren Erfindungsvariante weisen die Halteelemente einen rechteckähnlichen Grundriss auf, wobei wenigstens vier äußere Zugstangen in den äußeren Eckbereichen des Halteelementes und wenigstens vier innere Zugstangen im Bereich um das säulenartige Element vorgesehen sind. Ein rechteckähnlicher Grundriss, insbesondere ein quadratischer Grundriss, ist in vorteilhafter Weise auf den zumeist kreisrunden Grundriss einer Hochspannungswicklung angepasst. In den vier äußeren nicht von der Hochspannungswicklung bedeckten Eckbereichen sind erfindungsgemäß je ein, aus Redundanz- und Sicherheitsgründen vorzugsweise jedoch jeweils zwei äußere Zugstangen oder Zugseile anzuordnen. Entsprechend sind in dem Bereich um das säulenähnliche Element, also dem Bereich, der bei angeordneter Hochspannungswicklung deren Innenraum entspricht, ebenfalls wenigstens vier parallele Zugstangen oder Zugseile anzuordnen, vorzugsweise in einem Winkel von jeweils 90° zueinander. Idealerweise sind diese jedoch auch paarweise angeordnet, so dass sich insgesamt jeweils acht Zugstangen beziehungsweise Zugseile für die Eckbereiche beziehungsweise den inneren Bereich ergeben. Bevorzugter Weise sind in den jeweiligen Halteelementen in mehreren Abstandsradien zum säulenartigen Element entsprechende Verbindungsvorrichtungen für Zugstangen oder Zugseile vorgesehen, beispielsweise entsprechende Gewindebohrungen. Dies ermöglicht die Verwendung ein und derselben Wicklungsfixiervorrichtung für verschiedene Durchmesser von jeweiligen zu fixierenden Hochspannungsspulen.

Der rechteckähnliche Grundriss der Halteelemente ist bevorzugter Weise auf das Hohlraumprofil von bevorzugten Transportmitteln anzupassen, also insbesondere Eisenbahnwagen und Lastkraftwagen. Dies beträgt in etwa 2,8m in der Breite, bei einem Straßentransport 2,5m, und etwa 4m in der Höhe. Insoweit wäre auch kein Vorteil für den Transport gewonnen, wenn bei einer kleineren zu transportierenden Hochspannungswicklung eine kleinere Wicklungsfixiervorrichtung verwendet würde.

In einer besonders bevorzugten Variante der Wicklungsfixiervorrichtung ist an einer Seite eines Halteelementes eine Kippvorrichtung zum Überführen der Wicklungsfixierungsvorrichtung in eine waagerechte Transportposition vorgesehen ist. Dieses kann beispielsweise ein Scharnier sein, welches bedarfsweise mit einer Arbeitsfläche verbindbar ist, oder aber auch eine Abrollkante. Hierdurch wird in vorteilhafter Weise ein Überführen eines in senkrechter Position montierten Aufbaus mit Wicklungsfixiervorrichtung und darin fixierter Hochspannungswicklung in eine waagerechte Transportposition ermöglicht.

Entsprechend einer bevorzugten Ausgestaltung der erfindungsgemäßen Wicklungsfixiervorrichtung umfasst diese eine hohlzylindrische Hochspannungswicklung, welche in dieser fixiert beziehungsweise stabilisiert ist.

Gemäß einer bevorzugten Ausgestaltungsvariante der erfindungsgemäßen Wicklungsfixiervorrichtung sind zur radialen Fixierung der angepassten Distanzelemente mit dem inneren Radius der hohlzylindrischen Wicklungauch Klemmelemente, insbesondere Keile verwendet. Dies ermöglicht beispielsweise eine einfachere Anordnung von Distanzelementen im Inneren der hohlzylindrischen Wicklung, da die Distanzelemente dann gezielt einen etwas geringeren Durchmesser aufweisen können, als der Innendurchmesser der hohlzylindrischen Wicklung. Eine abschließende Fixierung erfolgt dann über Keile, wodurch auch eventuelle Fertigungstoleranzen auf einfache Weise ausgeglichen werden können.

Gemäß einer weiteren Ausgestaltung der Erfindung ist die Wicklungsfixiervorrichtung zumindest in ihrem Positionierbereich von einer axial umlaufenden Membran zum Schutz der hohlzylindrischen Hochspannungswicklung umgeben, welche bedarfsweise auch segmentiert auszuführen ist, wobei dadurch ein abgeschlossener Innenraum gebildet ist. Diese kann beispielsweise aus einer Kunststofffolie, insbesondere aus Polyäthylen, gefertigt sein. Die damit erzielbaren Vorteile bestehen insbesondere darin, dass die Hochspannungswicklung die Belastungen eines Transports, z. B. eines Seetransports ohne Container als Stückgut ohne Feuchtigkeitsaufnahme und ohne Beschädigungen überstehen. Die Folie dient hierbei dem Schutz vor Feuchtigkeit, wobei der mechanische Schutz an den axialen Enden durch die plattenähnlichen Halteelemente und in den Eckbereichen zwischen den Halteelementen durch die in den Eckbereichen angeordneten Zugstangen gewährleistet ist. Vorzugsweise weist die Wicklungsfixiervorrichtung Außenabmessungen ähnlich denen eines Standardcontainers auf, so dass diese einfach mittels bestehender Transportsysteme wie Eisenbahnwagen oder Lastkraftwagen transportierbar ist.

Gemäß einer weiteren erfindungsgemäßen Ausgestaltung ist die Wicklungsfixiervorrichtung zusammen und einer durch sie fixieren Hochspannungswicklung liegend in einem genormten Transportcontainer angeordnet. Der genormte Transportcontainer ist beispielsweise ein 6,1 m (20 Fuß) oder 12 m (40 Fuß) Standardcontainer. Dies ermöglicht eine weiter vereinfachte Integration in bestehende Transportsysteme, insbesondere auch ein Containerschiff, bei welchem ein Stapeln einer Vielzahl an Standardcontainern üblich ist.

Die gestellte Aufgabe wird auch gelöst durch ein Verfahren zur Fixierung einer hohlzylindrischen Hochspannungswicklung in einer erfindungsgemäßen Wicklungsfixiervorrichtung nach einem der Ansprüche 6 bis 9, umfassend wenigstens folgende Schritte:
- Waagerechte Anordnung eines der ersten plattenähnlichen Halteelemente auf einer waagerechten Arbeitsfläche
- Positionierung des säulenartigen Elementes in senkrechter Position und Verbindung mit dem ersten plattenähnlichen Halteelement
- Anordnung von wenigstens einem unteren Lagerelement auf dem ersten plattenähnlichen Halteelement
- Anordnung des wenigstens einen Distanzelementes mit einer ersten Grundfläche zwischen den anderen zwei Distanzelementen mit einer über der ersten Grundfläche überstehenden zweiten Grundfläche längs des säulenartigen Elementes
- Auffahren der hohlzylindrischen Hochspannungswicklung
- radiale Fixierung der hohlzylindrischen Hochspannungswicklung mittels der Distanzelemente
- Anordnung von wenigstens einem oberen Lagerelement auf der hohlzylindrischen Hochspannungswicklung
- Anordnung des zweiten plattenähnlichen Halteelementes in waagerechter Position oberhalb des wenigstens einen oberen Lagerelementes
- Anordnung der Zugstangen oder Zugseile zwischen den Halteelementen
- Aufbringen einer axialen Zugkraft zwischen den Halteelementen mittels dieser Zugstangen oder Zugseile
- Kippen der Wicklungsfixiervorrichtung in eine waagerechte Transportposition

Optional sind dann noch beispielsweise die Schritte Fixierung von Trocknungsmaterial wie Silikagel sowie die Montage einer Rahmenvorrichtung mit Folienmembran denkbar. Auf diese Weise ist der so entstandene Innenraum, in dem die Hochspannungswicklung angeordnet ist, gut vor Feuchtigkeitseinwirkungen geschützt, was insbesondere auch bei einem Seetransport von Vorteil ist.

Die erfindungsgemäßen Vorteile entsprechen insoweit den zuvor für die Wicklungsfixiervorrichtung genannten. Es sei darauf hingewiesen, dass die Reihenfolge der Arbeitsschritte nicht zwangsläufig in dieser genannten Reihenfolge nötig ist. Diese richtet sich vielmehr nach jeweiligen der Machbarkeit. Beispielsweise können die Distanzelemente erst dann angeordnet werden, wenn das säulenartige Element angeordnet worden ist.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: einen Schnitt durch eine erste Wicklungsfixiereinrichtung,
- Fig. 2: eine Draufsicht auf ein exemplarisches Halteelement,
- Fig. 3: einen Schnitt durch zweite Wicklungsfixiereinrichtung mit Wicklung und
- Fig. 4: einen Schnitt durch eine liegende Wicklungsfixiereinrichtung,

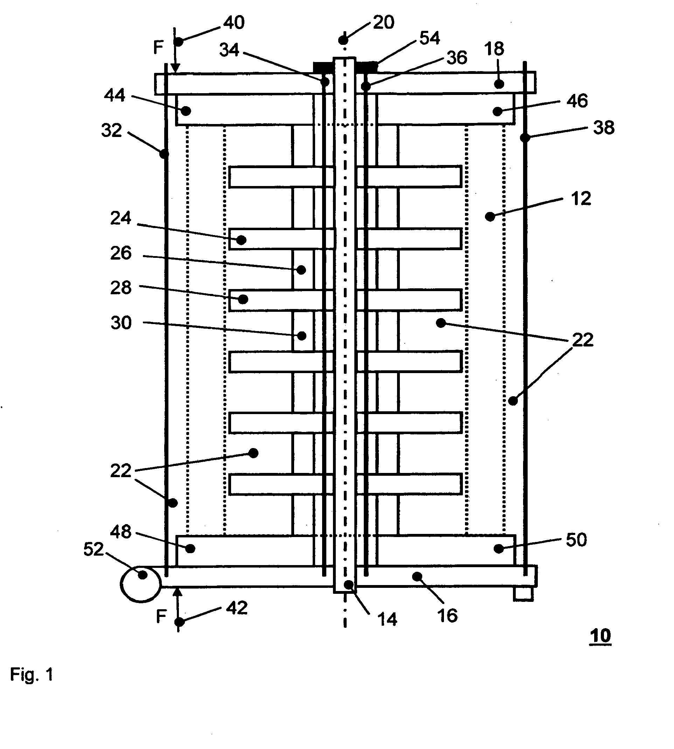

Fig. 1 zeigt einen Schnitt durch eine erste Wicklungsfixiereinrichtung 10. An den beiden axialen Enden eines säulenartigen Elementes 14, in diesem Fall ein Abstützrohr aus Metall mit einer Länge von mehreren Metern, ist ein unteres 16 und ein oberes 18 Halteelement angeordnet. Dazwischen ist ein Positionierbereich 22 zur Fixierung einer Hochspannungswicklung ausgeprägt, welche in diesem Fall gestrichelt mit der Bezugsnummer 12 als Hohlzylinder angedeutet ist, welcher sich rotationssymmetrisch um die eine Erstreckungsachse 20 erstreckt. Diese kennzeichnet zugleich auch den axialen Verlauf des Abstützrohres 14. Das Halteelement 16 ist als plattenähnliche Sandwichkonstruktion aus Metall ausgeführt und weist eine Grundfläche von ca. 2,8m x 2,8m auf, wobei an der in der Fig. linken Seite eine Abrollvorrichtung 52 vorgesehen ist, um welche herum die Wicklungsfixiervorrichtung 10 beziehungsweise eine darin fixierte Hochspannungswicklung 12 von einer senkrechten Montageposition in eine waagerechte Transportposition kippbar ist.

Auf dem unteren Halteelement sind mehrere hölzerne Lagerelemente 48, 50 ringähnlich um die Erstreckungsachse 20 angeordnet. Diese haben eine in etwa gleiche Höhe, beispielsweise 20cm, und dienen dazu, eine darauf abgestützte Hochspannungswicklung 12 vor etwaigen Beschädigungen, beispielsweise durch eine punktuell zu hohe Druckbelastung, zu schützen. Es ist durchaus denkbar, dass in dem plattenähnlichen Halteelement 16 auf die Form der Lagerelemente 48, 50 angepasste Vertiefungen vorgesehen sind, um deren seitliches Verrutschen oder Fehlpositionieren auszuschließen. Es ist aber auch denkbar, die Lagerelemente 48, 50 dauerhaft auf dem Halteelement 16 zu fixieren, beispielsweise mittels Verklebung.

Längs des säulenartigen Elementes 14 sind in alternierender Abfolge Distanzelemente 24, 28, welche einen auf den Innendurchmesser einer zu fixierenden Wicklung angepassten größeren Querschnitt aufweisen, und Distanzelemente 26, 30 mit einem deutlich geringeren Querschnitt angeordnet, wobei letztere letztendlich nur der axialen Beabstandung der anderen Distanzelemente 24, 28 mit größerem Querschnitt dienen. Die Distanzelemente 24, 28 weisen in ihrer Mitte ein Loch auf, welches auf den Durchmesser des säulenartigen Elementes 14 angepasst ist, so dass ein seitliches Verschieben quer zur Erstreckungsachse 20 ausgeschlossen ist. Somit ist auch ein seitliches Verschieben einer Hochspannungswicklung 12 mit entsprechendem Innendurchmesser ausgeschlossen. Die Distanzelemente 24, 26, 28, 30 sind lose gestapelt und nicht miteinander verbunden.

Das obere Halteelement 18 ist - mit Ausnahme einer nicht vorhandenen Kippvorrichtung - in etwa analog zum unteren Halteelement 16 ausgeprägt, wobei die Verbindung mit dem oberen axialen Ende des säulenartigen Elementes 14 verschiebbar, also nicht verschraubt ist. Deshalb ist das obere Halteelement 18 komplett lös- und entfernbar, so dass bedarfsweise ein freier Zugang von oben auf den Positionierbereich 22 gewährleistet ist. Entsprechend dem unteren Halteelement 16 sind zwischen dem oberen Halteelement 18 und dem Positionierbereich Lagerelemente 44, 46 vorgesehen.

Zur weiteren Fixierung beziehungsweise Stabilisierung einer zwischen den Lagerelementen 44, 46, 48, 50 angeordneten Hochspannungswicklung sind Mittel zum Aufbringen einer Zugkraft 40⇔42 zwischen den Halteelementen 16, 18 vorgesehen, in diesem Fall Zugstangen 32, 34, 36, 38, welche beidseitig mit einem Gewinde versehen sind. In den Halteelementen 16, 18 sind entsprechende Gewindegänge vorgesehen, so dass eine justierbare kraftschlüssige Verbindung herstellbar ist. Selbstverständlich sind auch andere Möglichkeiten für eine kraftschlüssige Verbindung möglich, beispielsweise ein Durchgangsloch in einem der Halteelemente und ein Zugseil mit einer entsprechenden Verdickung an einem seiner beiden Enden. Wenn das Halteseil mit seinem nicht verdickten Ende durch das Durchgangsloch geführt ist, ist ein Durchschlüpfen des verdickten Endes durch das Durchgangsloch ausgeschlossen und somit ebenfalls eine kraftschlüssige Verbindung hergestellt.

Eine Zugkraft 40⇔42 der Zugstangen 32, 34, 36, 38 bewirkt eine Kompression oder eine Druckkraft auf eine zwischen den Halteelementen angeordnete Hochspannungswicklung, so dass diese dadurch stabilisiert wird und auch ohne mechanische Deformation zusammen mit der Wicklungsfixiervorrichtung in eine waagerechte Position gekippt werden kann. Zur weiteren Fixierung des oberen Halteelementes 18 ist an dem oberen axialen Ende des säulenartigen Elementes 20 eine Verschraubung 54 vorgesehen.

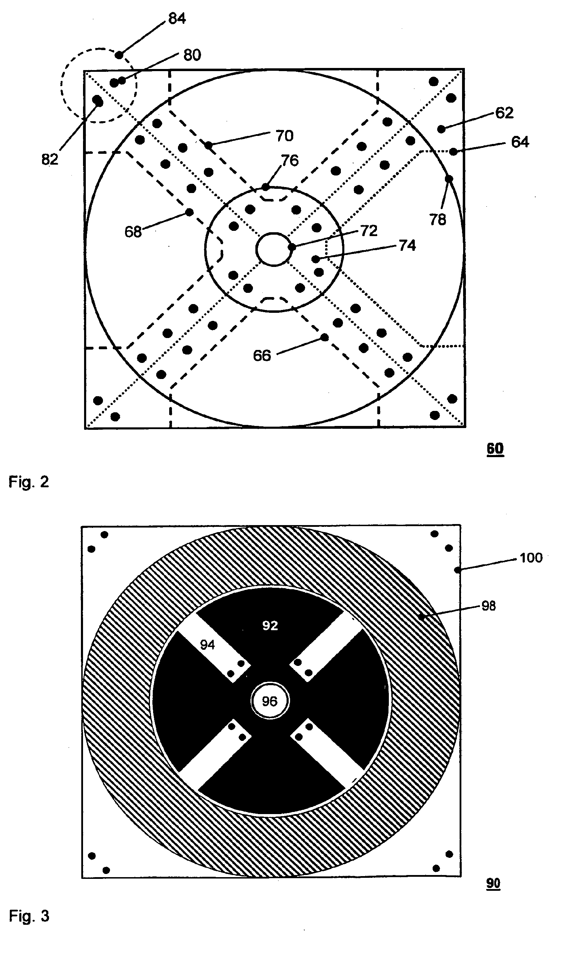

Fig. 2 zeigt eine Draufsicht 60 auf ein exemplarisches Halteelement 62 mit einem quadratischen Grundriss. Längs zweier zwischen jeweiligen Eckpunkten 84 des Grundrisses verlaufender gedachter Linien sind paarweise in verschiedenen Abstandsradien zum Mittelpunkt Gewindelöcher 80, 82 vorgesehen, welche zur Aufnahme von Zugstangen mit entsprechenden Gewinden dienen. Je nach Durchmesser einer aufzunehmenden Hochspannungswicklung werden die Gewindelöcher 80, 82 mit den dazu passenden Abstandsradien gewählt. Bevorzugter Weise ragen die radial äußeren Gewindelöcher über den Außenradius einer auf dem Halteelement 62 angeordneten Hochspannungswicklung hinaus, so dass diese auch einen mechanischen Schutz für die Hochspannungswicklung darstellen. Mit einer gestrichelten Linie angedeutet sind die trapezähnlichen Grundflächen von vier Lagerelemente 64, 66, 68, 70, welche ringförmig um den Mittelpunkt des quadratischen Halteelementes 62 angeordnet sind. Senkrecht zum Halteelement 62 ist in dessen Mittelpunkt ein säulenartiges Element 72 angeordnet. Im inneren Bereich 74 um das säulenartige Element 72 sind insgesamt acht innere Gewindebohrungen vorgesehen, in welche Zugstangen geschraubt werden können, welche dann im inneren Bereich einer auf dem Halteelement 62 angeordneten hohlzylindrischen Hochspannungswicklung verlaufen. Zusammen mit vorzugsweise acht weiteren Zugstangen, welche radial außen vorgesehen sind, ist eine Hochspannungswicklung dann bevorzugter Weise mittels insgesamt sechzehn Zugstangen oder auch Zugseilen verspannbar. Die Grundfläche des Positionierbereiches für eine Anordnung von Hochspannungswicklungen ist mit einem Kreis mit der Bezugsziffer 78 angedeutet, wobei der Kreis mit der Bezugsziffer 76 die für den Innenraum einer Hochspannungswicklung vorgesehene Grundfläche darstellt.

Fig. 3 zeigt einen Schnitt 90 durch eine zweite Wicklungsfixiereinrichtung mit einer Hochspannungswicklung 98. In den Eckbereichen der Wicklungsfixiereinrichtung sind jeweils zwei Zugstangen mit ihrem Querschnitt dargestellt, welche auch einen mechanischen Schutz für die Hochspannungswicklung 98 darstellen, in deren inneren Bereich ein auf deren Querschnitt angepasstes Distanzelement 92 gezeigt ist. Dieses weist insgesamt vier Einschlitzungen 94 auf, durch welche ebenfalls mit ihrem Querschnitt angedeutete innere Zugstangen geführt sind. Längs der Mittelachse der Hochspannungswicklung ist ein säulenähnliches Element 96 angeordnet, welches durch ein eine entsprechende Bohrung durch das Distanzelement 92 geführt ist. Kongruent mit den Außenkanten der quadratischen Grundfläche der Wicklungsfixiereinrichtung mit der Bezugsnummer 100 angedeutet ist eine Membran, welche den entsprechenden Positionierbereich umschließt. Eine derartige Membran verhindert beispielsweise im Falle eines Seetransportes ein Eindringen von Feuchtigkeit in die zu transportierende Hochspannungswicklung, indem sie durch Volumenanpassung einen Druckausgleich zwischen Innen- und Außendruck erzeugt und damit einen Austausch zwischen der trocknen Innenluft durch feuchte Außenluft verhindert.

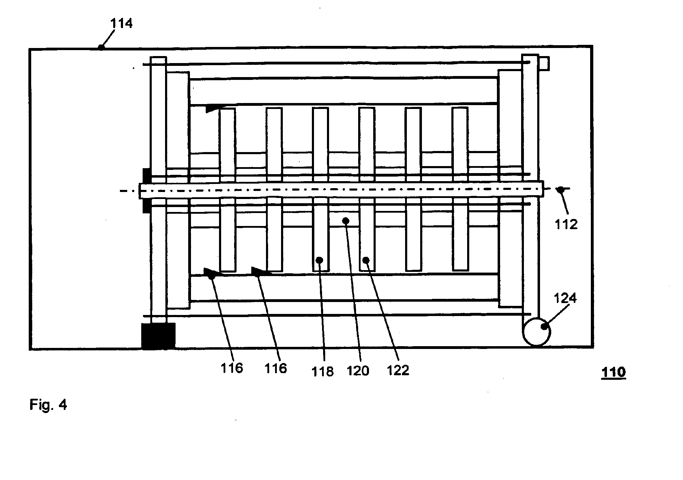

Fig. 4 zeigt einen Schnitt 110 durch eine liegende Wicklungsfixiereinrichtung mit darin fixierter Hochspannungswicklung, welche in etwas der in Fig. 1 gezeigten Wicklungsfixiereinrichtung entspricht. Die mit der Linie mit der Bezugsziffer 112 angedeutete Ausrichtung ist somit waagerecht. Die Vorrichtung ist in einem Standardtransportcontainer 114 angeordnet, so dass diese auf einfache Weise mit Bahn, Lastkraftwagen oder auch Containerschiffen transportiert werden kann. Der Kippvorgang der Vorrichtung in die waagerechte Transportposition ist zuvor über die mit der Bezugsziffer 124 angedeutete Kippvorrichtung, in diesem Fall eine Abrollkante, erfolgt. Eine radiale Abstützung der Hochspannungswicklung erfolgt durch auf den Innendurchmesser der Hochspannungswicklung angepasste Distanzelemente 118, 122, welche in diesem Fall noch mit Keilen116 verkantet sind, um jegliches Bewegungsspiel auszuschließen.

### Bezugszeichenliste

- 10: Schnitt durch eine erste Wicklungsfixiereinrichtung
- 12: angedeutete hohlzylindrische Hochspannungswicklung
- 14: erstes säulenartiges Element
- 16: unteres Halteelement
- 18: oberes Halteelement
- 20: senkrechte axiale Erstreckung der ersten Wicklungsfixiervorrichtung
- 22: Positionierbereich
- 24: erstes Distanzelement von erster Wicklungsfixiereinrichtung
- 26: zweites Distanzelement von erster Wicklungsfixiereinrichtung
- 28: drittes Distanzelement von erster Wicklungsfixiereinrichtung
- 30: viertes Distanzelement von erster Wicklungsfixiereinrichtung
- 32: erste Zugstange von erster Wicklungsfixiereinrichtung
- 34: zweite Zugstange von erster Wicklungsfixiereinrichtung
- 36: dritte Zugstange von erster Wicklungsfixiereinrichtung
- 38: vierte Zugstange von erster Wicklungsfixiereinrichtung
- 40: Kraft auf oberes Halteelement
- 42: Kraft auf unteres Halteelement
- 44: erstes Lagerelement von erster Wicklungsfixiereinrichtung
- 46: zweites Lagerelement von erster Wicklungsfixiereinrichtung
- 48: drittes Lagerelement von erster Wicklungsfixiereinrichtung
- 50: viertes Lagerelement von erster Wicklungsfixiereinrichtung
- 52: erste Kippvorrichtung
- 54: Verschraubung
- 60: Draufsicht auf ein exemplarisches Halteelement
- 62: exemplarisches Halteelement
- 64: erstes Lagerelement von exemplarischem Halteelement
- 66: zweites Lagerelement von exemplarischem Halteelement
- 68: drittes Lagerelement von exemplarischem Halteelement
- 70: viertes Lagerelement von exemplarischem Halteelement
- 72: zweites säulenartiges Element
- 74: Bereich um zweites Säulenartige Element
- 76: innerer Grundflächenradius von Positionierbereich
- 78: äußerer Grundflächenradius von Positionierbereich
- 80: erstes Gewindeloch für Zugstangen
- 82: zweites Gewindeloch für Zugstangen
- 84: äußerer Eckbereich
- 90: Schnitt durch zweite Wicklungsfixiereinrichtung mit Wicklung
- 92: Distanzelement
- 94: Einschlitzung
- 96: drittes säulenartiges Element
- 98: Hochspannungswicklung
- 100: Membran
- 110: Schnitt durch eine dritte Wicklungsfixiereinrichtung ein einem Container
- 112: waagerechte axiale Erstreckung der Wicklungsfixiervorrichtung
- 114: Container
- 116: Klemmelement
- 118: erstes Distanzelement von dritter Wicklungsfixiereinrichtung
- 120: zweites Distanzelement von dritter Wicklungsfixiereinrichtung
- 122: drittes Distanzelement von dritter Wicklungsfixiereinrichtung
- 124: zweite Kippvorrichtung

## Patentansprüche

1. Wicklungsfixiervorrichtung (10) für eine hohlzylindrische Hochspannungswicklung (12, 98), umfassend ein säulenartiges Element (14, 72, 96) und zwei Halteelemente (16, 18, 62), wobei das säulenartige Element an seinen beiden axialen (20, 112) Enden mit jeweils einem der quer dazu angeordneten Halteelemente (16, 18, 62) verbunden ist, von denen wenigstens eines längs des säulenartiges Elementes (14, 72, 96) bewegbar und von diesem lösbar ist, wobei zwischen den beiden Halteelementen (16, 18, 62) ein Positionierbereich (22) zur Anordnung der hohlzylindrischen Hochspannungswicklung (12, 98) gebildet ist,
ferner umfassend Mittel (32, 34, 36, 38) um das wenigstens eine bewegbare Halteelement (16, 18, 62) gegenüber dem anderen Halteelement (16, 18, 62) mit einer Zugkraft (40 ⇔ 42) zu beaufschlagen, so dass eine Fixierung der hohlzylindrischen Hochspannungswicklung (12, 98) an ihren axialen Enden ermöglicht ist, **dadurch gekennzeichnet, dass** die Wicklungsfixiervorrichtung ferner im Positionierbereich (22) längs des säulenartigen Elementes (14, 72, 96) vorgesehene axial (20, 112) bewegliche Distanzelemente (24, 26, 28, 30, 92, 118, 120, 122) umfasst, durch welche eine radiale Fixierung der hohlzylindrischen Hochspannungswicklung (12, 98) in ihrem Innenraum ermöglicht ist,
wobei längs des säulenartigen Elementes wenigstens eines der Distanzelemente (26, 120) mit einer ersten Grundfläche zwischen zwei anderen der Distanzelemente (24, 28, 92, 118, 122) mit einer über der ersten Grundfläche überstehenden zweiten Grundfläche angeordnet ist, wobei die zweite Grundfläche auf den Innendurchmesser der Hochspannungswicklung (12, 98) angepasst ist.

2. Wicklungsfixiervorrichtung nach Anspruch 1, **dadurch gekennzeichnet, dass** wenigstens eines der Halteelemente (16, 18, 62) plattenähnlich ausgeprägt ist.

3. Wicklungsfixiervorrichtung nach einem der Ansprüche 1 oder 2, **dadurch gekennzeichnet, dass** wenigstens ein Lagerelement (44, 46, 48, 50, 64, 66, 68, 70) an der dem Positionierbereich (22) zugewandten Seite des jeweiligen Halteelementes (16, 18, 62) vorgesehen ist.

4. Wicklungsfixiervorrichtung nach einem der vorherigen Ansprüche, **dadurch gekennzeichnet, dass** die Lager- (44, 46, 48, 50, 64, 66, 68, 70) und/oder Distanzelemente (24, 26, 28, 30, 92, 118, 120, 122) vorwiegend aus Holz gefertigt sind.

5. Wicklungsfixiervorrichtung nach einem der vorherigen Ansprüche, **dadurch gekennzeichnet, dass** die Halteelemente (16, 18, 62) und/oder das säulenartige Element (14, 72, 96) vorwiegend aus einem Metal gefertigt sind.

6. Wicklungsfixiervorrichtung nach einem der vorherigen Ansprüche, **dadurch gekennzeichnet, dass** Zugstangen (32, 34, 36, 38) oder Zugseile zwischen den Halteelementen (16, 18, 62) vorgesehen sind, um die Zugkraft (40 ⇔ 42) zwischen diesen Halteelementen (16, 18, 62) aufzubringen.

7. Wicklungsfixiervorrichtung nach Anspruch 6, **dadurch gekennzeichnet, dass** die Zugstangen (32, 34, 36, 38) oder Zugseile zumindest an einem ihrer beiden Enden mit einem Gewinde versehen sind.

8. Wicklungsfixiervorrichtung nach einem der Ansprüche 6 oder 7, **dadurch gekennzeichnet, dass** die Halteelemente (16, 18, 62) einen rechteckähnlichen Grundriss aufweisen und wenigstens vier äußere Zugstangen (32, 38) in den äußeren Eckbereichen (84) und wenigstens vier innere Zugstangen (34, 36) im Bereich (74) um das säulenartige Element (14, 72, 96) vorgesehen sind.

9. Wicklungsfixiervorrichtung nach einem der vorherigen Ansprüche, **dadurch gekennzeichnet, dass** an einer Seite eines Halteelementes (16, 18, 62) eine Kippvorrichtung (52, 124) zum Überführen der Wicklungsfixierungsvorrichtung (10) in eine waagerechte Transportposition vorgesehen ist.

10. Wicklungsfixiervorrichtung nach einem der vorherigen Ansprüche, **dadurch gekennzeichnet, dass** diese eine hohlzylindrische Hochspannungswicklung (12, 98) umfasst.

11. Wicklungsfixiervorrichtung nach Anspruch 10 , **dadurch gekennzeichnet, dass** zur radialen Fixierung mit den in ihrer Grundfläche auf den Innendurchmesser der Hochspannungswicklung angepassten Distanzelementen (24, 28, 30, 92, 118, 122) auch Klemmelemente, insbesondere Keile (116), verwendet sind.

12. Wicklungsfixiervorrichtung nach einem der vorherigen Ansprüche, **dadurch gekennzeichnet, dass** der Positionierbereich (22) von einer zumindest axial umlaufenden Membran (100) zum Schutz der hohlzylindrischen Hochspannungswicklung umgeben ist.

13. Wicklungsfixiervorrichtung nach einem der Ansprüche 10 bis 12 mit einem genormten Transportcontainer, **dadurch gekennzeichnet, dass**
die Wicklungsfixiervorrichtung liegend in dem genormten Transportcontainer (114) angeordnet ist.

14. Verfahren zur Fixierung einer hohlzylindrischen Hochspannungswicklung (12, 98) in einer Wicklungsfixiervorrichtung (10) nach einem der Ansprüche 6 bis 9, umfassend wenigstens folgende Schritte:
• Waagerechte Anordnung eines ersten der plattenähnlichen Halteelemente (16) auf einer waagerechten Arbeitsfläche,
• Positionierung des säulenartigen Elementes (14, 72, 96) in senkrechter Position und Verbindung mit dem ersten plattenähnlichen Halteelement (16),
• Anordnung von wenigstens einem unteren Lagerelement (48, 50) auf dem ersten plattenähnlichen Halteelement (16),
• Anordnung des wenigstens einen Distanzelementes (26,120) mit einer ersten Grundfläche zwischen den anderen zwei Distanzelementen (24, 28, 30, 92, 118, 122) mit einer über der ersten Grundfläche überstehenden zweiten Grundfläche längs des säulenartigen Elementes (14, 72, 96),
• Auffahren der hohlzylindrischen Hochspahnungswicklung (12, 98),
• radiale Fixierung der hohlzylindrischen Hochspannungswicklung (12, 98) mittels der Distanzelemente,
• Anordnung von wenigstens einem oberen Lagerelement (44, 46) auf der hohlzylindrischen Hochspannungswicklung (12, 98),
• Anordnung des zweiten plattenähnlichen Halteelementes (18) in waagerechter Position oberhalb des wenigstens einen oberen Lagerelementes (44, 46),
• Anordnung der Zugstangen (32, 34, 36, 38) oder Zugseile zwischen den Halteelementen (16, 18, 62) und Aufbringen einer axialen Zugkraft (40 ⇔ 42) zwischen den Halteelementen mittels dieser Zugstangen oder Zugseile
• Kippen der Wicklungsfixiervorrichtung (10) in eine waagerechte Transportposition.

## Claims

1. Winding fixing device (10) for a hollow-cylindrical high-voltage winding (12, 98), comprising a pillar-like element (14, 72, 96) and two retaining elements (16, 18, 62), wherein the pillar-like element is connected at its two axial ends (20, 112) to, in each case, one of the retaining elements (16, 18, 62) which is arranged transversely with respect thereto, of which retaining elements at least one can be moved along the pillar-like element (14, 72, 96) and detached therefrom, wherein a positioning region (22) for arranging the hollow-cylindrical high-voltage winding (12, 98) is formed between the two retaining elements (16, 18, 62), further comprising means (32, 34, 36, 38) for applying a tensile force (40 ↔ 42) to the at least one movable retaining element (16, 18, 62) with respect to the other retaining element (16, 18, 62), with the result that fixing of the hollow-cylindrical high-voltage winding (12, 98) at its axial ends is made possible, **characterized in that** in the positioning region (22) the winding fixing device furthermore comprises spacing elements (24, 26, 28, 30, 92, 118, 120, 122) which can move axially (20, 112) and are provided along the pillar-like element (14, 72, 96), and by which radial fixing of the hollow-cylindrical high-voltage winding (12, 98) in the interior thereof is made possible
wherein at least one of the spacing elements (26, 120) with a first base surface is arranged along the pillar-like element between two others of the spacing elements (24, 28, 92, 118, 122) with a second base surface protruding beyond the first base surface, wherein the second base surface is adapted to the internal diameter of the high-voltage winding (12, 98).

2. Winding fixing device according to Claim 1, **characterized in that** at least one of the retaining elements (16, 18, 62) is embodied in a plate-like fashion.

3. Winding fixing device according to one of Claims 1 and 2, **characterized in that** at least one bearing element (44, 46, 48, 50, 64, 66, 68, 70) is provided on the side of the respective retaining element (16, 18, 62) which faces the positioning region (22).

4. Winding fixing device according to one of the preceding claims, **characterized in that** the bearing elements (44, 46, 48, 50, 64, 66, 68, 70) and/or spacing elements (24, 26, 28, 30, 92, 118, 120, 122) are predominantly fabricated from wood.

5. Winding fixing device according to one of the preceding claims, **characterized in that** the retaining elements (16, 18, 62) and/or the pillar-like element (14, 72, 96) are predominantly fabricated from a metal.

6. Winding fixing device according to one of the preceding claims, **characterized in that** traction rods (32, 34, 36, 38) or traction cables are provided between the retaining elements (16, 18, 62) in order to apply the tensile force (40 ↔ 42) between said retaining elements (16, 18, 62).

7. Winding fixing device according to Claim 6, **characterized in that** the traction rods (32, 34, 36, 38) or traction cables are provided with a thread at least at one of their two ends.

8. Winding fixing device according to one of Claims 6 and 7, **characterized in that** the retaining elements (16, 18, 62) have a rectangular-like footprint, and at least four external traction rods (32, 38) are provided in the external corner regions (84) and at least four internal traction rods (34, 36) are provided in the region (74) around the pillar-like element (14, 72, 96).

9. Winding fixing device according to one of the preceding claims, **characterized in that** a tilting device (52, 124) for moving the winding fixing device (10) into a horizontal transportation position is provided on one side of a retaining element (16, 18, 62).

10. Winding fixing device according to one of the preceding claims, **characterized in that** said winding fixing device comprises a hollow-cylindrical high-voltage winding (12, 98).

11. Winding fixing device according to Claim 10, **characterized in that** clamping elements, in particular wedges (116), are also used for radial fixing to the spacing elements (24, 28, 30, 92, 118, 122) adapted in respect of their base surface to the internal diameter of the high-voltage winding.

12. Winding fixing device according to one of the preceding claims, **characterized in that** the positioning region (22) is surrounded by a diaphragm (100) which runs around at least axially for protecting the hollow-cylindrical high-voltage winding.

13. Winding fixing device according to one of Claims 10 to 12 having a standardized transportation container, **characterized in that** the winding fixing device is arranged in a lying position in the standardized transportation container (114).

14. Method for fixing a hollow-cylindrical high-voltage winding (12, 98) in a winding fixing device (10) according to one of Claims 6 to 9, comprising at least the following steps:
• Horizontally arranging a first of the plate-like retaining elements (16) on a horizontal working surface,
• Positioning the pillar-like element (14, 72, 96) in a vertical position and connecting to the first plate-like retaining element (16),
• Arranging at least one lower bearing element (48, 50) on the first plate-like retaining element (16),
• Arranging the at least one spacing element (26, 120) with a first base surface between the other two spacing elements (24, 28, 30, 92, 118, 122) with a second base surface protruding beyond the first base surface along the pillar-like element (14, 72, 96),
• Moving up the hollow-cylindrical high-voltage winding (12, 98),
• Radial fixing of the hollow-cylindrical high-voltage winding (12, 98) by means of the spacing elements,
• Arranging at least one upper bearing element (44, 46) on the hollow-cylindrical high-voltage winding (12, 98),
• Arranging the second plate-like retaining element (18) in a horizontal position above the at least one upper bearing element (44, 46),
• Arranging the traction rods (32, 34, 36, 38) or traction cables between the retaining elements (16, 18, 62) and applying an axial tensile force (40 ↔ 42) between the retaining elements by means of said traction rods or traction cables, and
• Tilting the winding fixing device (10) into a horizontal transportation position.

## Revendications

1. Dispositif de fixation d'enroulement (10) pour un enroulement haute tension (12, 98) cylindrique creux, comportant un élément en forme de colonne (14, 72, 96) et deux éléments de retenue (16, 18, 62), l'élément en forme de colonne étant relié à ses deux extrémités axiales (20, 112) à chaque fois à l'un des éléments de retenue (16, 18, 62) disposés transversalement par rapport à celui-ci, parmi lesquels éléments de retenue au moins l'un est déplaçable le long de l'élément en forme de colonne (14, 72, 96) et peut être détaché de celui-ci, une région de positionnement (22) pour l'agencement de l'enroulement haute tension (12, 98) cylindrique creux étant formée entre les deux éléments de retenue (16, 18, 62), et comportant en outre des moyens (32, 34, 36, 38) pour solliciter l'au moins un élément de retenue déplaçable (16, 18, 62) par rapport à l'autre élément de retenue (16, 18, 62) avec une force de traction (40 ↔ 42), de telle sorte qu'une fixation de l'enroulement haute tension (12, 98) cylindrique creux à ses extrémités axiales soit rendue possible, **caractérisé en ce que** le dispositif de fixation d'enroulement comporte en outre des éléments d'espacement (24, 26, 28, 30, 92, 118, 120, 122) prévus le long de l'élément en forme de colonne (14, 72, 96) dans la région de positionnement (22) et mobiles axialement (20, 112), au moyen desquels une fixation radiale de l'enroulement haute tension (12, 98) cylindrique creux dans son espace intérieur est rendue possible,
au moins l'un des éléments d'espacement (26, 120) comportant une première surface de base étant agencé le long de l'élément en forme de colonne entre deux autres des éléments d'espacement (24, 28, 92, 118, 122) comportant une deuxième surface de base faisant saillie au-delà de la première surface de base, la deuxième surface de base étant adaptée au diamètre intérieur de l'enroulement haute tension (12, 98).

2. Dispositif de fixation d'enroulement selon la revendication 1, **caractérisé en ce qu'**au moins l'un des éléments de retenue (16, 18, 62) est réalisé à la manière d'une plaque.

3. Dispositif de fixation d'enroulement selon l'une quelconque des revendications 1 ou 2, **caractérisé en ce qu'**au moins un élément d'appui (44, 46, 48, 50, 64, 66, 68, 70) est prévu sur le côté de l'élément de retenue (16, 18, 62) respectif tourné vers la région de positionnement (22).

4. Dispositif de fixation d'enroulement selon l'une quelconque des revendications précédentes, **caractérisé en ce que** les éléments d'appui (44, 46, 48, 50, 64, 66, 68, 70) et/ou d'espacement (24, 26, 28, 30, 92, 118, 120, 122) sont fabriqués principalement en bois.

5. Dispositif de fixation d'enroulement selon l'une quelconque des revendications précédentes, **caractérisé en ce que** les éléments de retenue (16, 18, 62) et/ou l'élément en forme de colonne (14, 72, 96) sont fabriqués principalement en un métal.

6. Dispositif de fixation d'enroulement selon l'une quelconque des revendications précédentes, **caractérisé en ce que** des tiges de traction (32, 34, 36, 38) ou des câbles de traction sont prévu(e)s entre les éléments de retenue (16, 18, 62), afin d'appliquer la force de traction (40 ↔ 42) entre ces éléments de retenue (16, 18, 62).

7. Dispositif de fixation d'enroulement selon la revendication 6, **caractérisé en ce que** les tiges de traction (32, 34, 36, 38) ou les câbles de traction sont pourvu(e)s d'un filetage à au moins l'une de leurs deux extrémités.

8. Dispositif de fixation d'enroulement selon l'une quelconque des revendications 6 ou 7, **caractérisé en ce que** les éléments de retenue (16, 18, 62) présentent une projection horizontale similaire à un rectangle, et au moins quatre tiges de traction (32, 38) extérieures sont prévues dans les régions de coin (84) extérieures et au moins quatre tiges de traction (34, 36) intérieures sont prévues dans la région (74) autour de l'élément en forme de colonne (14, 72, 96).

9. Dispositif de fixation d'enroulement selon l'une quelconque des revendications précédentes, **caractérisé en ce qu'**un dispositif de basculement (52, 124) pour faire passer le dispositif de fixation d'enroulement (10) à une position de transport horizontale est prévu sur un côté d'un élément de retenue (16, 18, 62).

10. Dispositif de fixation d'enroulement selon l'une quelconque des revendications précédentes, **caractérisé en ce que** celui-ci comporte un enroulement haute tension (12, 98) cylindrique creux.

11. Dispositif de fixation d'enroulement selon la revendication 10, **caractérisé en ce que** des éléments de serrage, en particulier des cales (116), sont également utilisés, avec les éléments d'espacement (24, 28, 30, 92, 118, 122) dont la surface de base est adaptée au diamètre intérieur de l'enroulement haute tension, pour la fixation radiale.

12. Dispositif de fixation d'enroulement selon l'une quelconque des revendications précédentes, **caractérisé en ce que** la région de positionnement (22) est entourée par une membrane (100) s'étendant de manière périphérique au moins axialement pour la protection de l'enroulement haute tension cylindrique creux.

13. Dispositif de fixation d'enroulement selon l'une quelconque des revendications 10 à 12, comprenant un conteneur de transport standardisé, **caractérisé en ce que** le dispositif de fixation d'enroulement est disposé de manière couchée dans le conteneur de transport (114) standardisé.

14. Procédé de fixation d'un enroulement haute tension (12, 98) cylindrique creux dans un dispositif de fixation d'enroulement (10) selon l'une quelconque des revendications 6 à 9, comportant au moins les étapes suivantes :
- agencement à l'horizontale d'un premier des éléments de retenue (16) de type plaque sur une surface de travail horizontale,
- positionnement de l'élément en forme de colonne (14, 72, 96) dans une position verticale et liaison au premier élément de retenue (16) de type plaque,
- agencement d'au moins un élément d'appui (48, 50) inférieur sur le premier élément de retenue (16) de type plaque,
- agencement, le long de l'élément en forme de colonne (14, 72, 96), de l'au moins un élément d'espacement (26, 120) comprenant une première surface de base entre les deux autres éléments d'espacement (24, 28, 30, 92, 118, 122) comprenant une deuxième surface de base faisant saillie au-delà de la première surface de base,
- montée de l'enroulement haute tension (12, 98) cylindrique creux,
- fixation radiale de l'enroulement haute tension (12, 98) cylindrique creux au moyen des éléments d'espacement,
- agencement d'au moins un élément d'appui (44, 46) supérieur sur l'enroulement haute tension (12, 98) cylindrique creux,
- agencement du deuxième élément de retenue (18) de type plaque en position horizontale au-dessus de l'au moins un élément d'appui (44, 46) supérieur,
- agencement des tiges de traction (32, 34, 36, 38) ou des câbles de traction entre les éléments de retenue (16, 18, 62) et application d'une force de traction axiale (40 ↔ 42) entre les éléments de retenue au moyen de ces tiges de traction ou de ces câbles de traction,
- basculement du dispositif de fixation d'enroulement (10) dans une position de transport horizontale.
